# EUROPÄISCHE PATENTSCHRIFT

(11) **EP 3 388 646 B1**
(45) Veröffentlichungstag und Bekanntmachung des Hinweises auf die Patenterteilung: **10.06.2020**
(21) Anmeldenummer: 18166238.8
(22) Anmeldetag: 09.04.2018
(51) Int. Cl.: F01N 3/035, F01N 3/10, F01N 3/20, F01N 13/00

(54) **ABGASNACHBEHANDLUNGSSYSTEM FÜR EINEN VERBRENNUNGSMOTOR SOWIE VERBRENNUNGSMOTOR**
EXHAUST GAS PURIFICATION SYSTEM FOR AN INTERNAL COMBUSTION ENGINE AS WELL AS AN INTERNAL COMBUSTION ENGINE
SYSTÈME D'ÉCHAPPEMENT POUR UN MOTEUR À COMBUSTION INTERNE AINSI QU'UN MOTEUR À COMBUSTION INTERNE

(30) Priorität: 12.04.2017 DE 102017107974
(43) Veröffentlichungstag der Anmeldung: 17.10.2018
(73) Patentinhaber: VOLKSWAGEN AKTIENGESELLSCHAFT, 38440 Wolfsburg (DE)
(72) Erfinder: Car, Onur Ulas, 10115 Berlin (DE); Schlothauer, Janet, 38486 Klötze (DE)
(74) Vertreter: Gulde & Partner

(56) Entgegenhaltungen:
- AT-A2- 507 633
- DE-A1-102009 047 547
- DE-A1-102012 200 039
- DE-A1-102013 221 508
- FR-A1- 2 222 538
- JP-A- 2013 002 335

## Beschreibung

Die Erfindung betrifft ein Abgasnachbehandlungssystem für einen Verbrennungsmotor sowie einen Verbrennungsmotor mit einem Abgasnachbehandlungssystem gemäß den Oberbegriffen der unabhängigen Ansprüche.

Die aktuelle und eine zukünftig immer schärfer werdende Abgasgesetzgebung stellen hohe Anforderungen an die motorischen Rohemissionen und die Abgasnachbehandlung von Verbrennungsmotoren. Dabei stellen die Forderungen nach einem weiter sinkenden Verbrauch und die weitere Verschärfung der Abgasnormen hinsichtlich der zulässigen Stickoxid-Emissionen eine Herausforderung für die Motorenentwickler dar. Bei Ottomotoren erfolgt die Abgasreinigung in bekannter Weise über einen Drei-Wege-Katalysator, sowie dem Drei-Wege-Katalysator vor- und nachgeschaltete weitere Katalysatoren. Bei Dieselmotoren finden aktuell Abgasnachbehandlungssysteme Verwendung, welche einen Oxidationskatalysator oder NOx-Speicherkatalysator, einen Katalysator zur selektiven katalytischen Reduktion von Stickoxiden (SCR-Katalysator) sowie einen Partikelfilter zur Abscheidung von Rußpartikeln und gegebenenfalls weitere Katalysatoren aufweisen. Als Reduktionsmittel wird dabei bevorzugt Ammoniak verwendet. Weil der Umgang mit reinem Ammoniak aufwendig ist, wird bei Fahrzeugen üblicherweise eine synthetische, wässrige Harnstofflösung verwendet, die in einer dem SCR-Katalysator vorgeschalteten Mischeinrichtung mit dem heißen Abgasstrom vermischt wird. Durch diese Vermischung wird die wässrige Harnstofflösung erhitzt, wobei die wässrige Harnstofflösung Ammoniak im Abgaskanal freisetzt. Eine handelsübliche, wässrige Harnstofflösung setzt sind im Allgemeinen aus 32,5% Harnstoff und 67,5% Wasser zusammen.

Um nach einem Kaltstart des Verbrennungsmotors die Abgasnachbehandlungskomponenten möglichst schnell auf die benötigte Betriebstemperatur zu bringen, ist eine möglichst motornahe Anordnung der Abgasnachbehandlungskomponenten wünschenswert. Dies ist jedoch nicht immer möglich, da der Bauraum begrenzt ist. Daher werden der SCR-Katalysator und/oder der Rußpartikelfilter oftmals in einer motorfernen Unterbodenlage eines Kraftfahrzeuges angeordnet. Es sind motornahe SCR-Systeme bekannt, bei denen ein SCR-Katalysator und ein Rußpartikelfilter über einen Trichter verbunden sind. Durch die Trichtergeometrie wird versucht, den Gegendruck im Abgaskanal zu reduzieren, wodurch jedoch vergleichsweise viel Bauraum benötigt wird oder die Katalysatoren und/oder der Partikelfilter entsprechend kleinvolumig ausgeführt werden müssen, was eine häufige Regeneration erfordert und den Wirkungsgrad der Abgasreinigung aufgrund der kleinen Volumina begrenzt. Ferner sind aus dem Stand der Technik Abgasnachbehandlungssysteme mit einem motornahen Oxidationskatalysator und einem motornahen Partikelfilter bekannt. Zur weiteren Reduktion der Stickoxidemissionen ist bei Verbrennungsmotoren, welche mittels eines Abgasturboladers aufgeladen sind, eine Niederdruck-Abgasrückführung vorgesehen, welche stromabwärts der Turbine aus dem Abgaskanal abgezweigt und in den Ansaugtrakt stromaufwärts des Verdichters des Abgasturboladers mündet.

Dabei besteht ein Zielkonflikt aus einer möglichst motornahen Anordnung der Abgasnachbehandlungskomponenten und einer möglichst strömungsgünstigen Ausbildung des Abgaskanals. Zudem ist bei Abgasnachbehandlungssystemen mit einem Katalysator zur selektiven, katalytischen Reduktion von Stickoxiden (SCR-Katalysator) eine Mischstrecke im Abgaskanal notwendig, um eine möglichst gleichmäßige Verteilung des Reduktionsmittels über den Querschnitt des Abgaskanals vor Eintreten in den SCR-Katalysator zu erreichen.

Aus der DE 10 2008 042 413 A1 ist ein Abgasreinigungssystem für einen Verbrennungsmotor bekannt, bei dem in einem Abgaskanal des Verbrennungsmotors ein Partikelfilter und stromabwärts des Partikelfilters ein SCR-Katalysator angeordnet ist. Dabei wird das Abgas nach Austritt aus dem Partikelfilter und vor Eintritt in den SCR-Katalysator zweimal um jeweils 90° umgelenkt und dem Abgas ein Reduktionsmittel zugeführt. Durch die mehrfache Umlenkung entstehen im Abgasstrom des Verbrennungsmotors Verwirbelungen, welche eine Durchmischung des Abgasstroms und des Reduktionsmittels unterstützen und somit auf einer vergleichsweise kurzen Mischstrecke zu einer Gleichverteilung des Reduktionsmittels über den Querschnitt des Abgaskanals führen, sodass auf einen zusätzlichen Abgasmischer verzichtet werden kann.

Die AT 507 633 A2 offenbart ein Abgasnachbehandlungssystem für einen Verbrennungsmotor mit einer Abgasanlage, welche mit einem Auslass des Verbrennungsmotors
verbunden ist. Dabei ist in Strömungsrichtung eines Abgases des Verbrennungsmotors durch die Abgasanlage stromabwärts eines Dieseloxidationskatalysators ein Partikelfilter angeordnet. Die Abgasanlage weist einen Abgaskanal auf, welcher mit einem ersten Abschnitt
den Auslass des Verbrennungsmotors mit dem Dieseloxidationskatalysator und in einem zweiten Abschnitt den Dieseloxidationskatalysator mit dem Partikelfilter verbindet.

Aus der DE 10 2012 200 039 A1 ist ein Verfahren zum Betreiben eines SCR-Katalysatorsystems mit einem ersten SCR-Katalysator und einem zweiten SCR-Katalysator bekannt. Dabei ist stromaufwärts des ersten SCR-Katalysators ein Dosierelement vorgesehen, mit welchem ein Reduktionsmittel in den Abgaskanal des Verbrennungsmotors eindosierbar ist.

JP 2013 002 335 offenbart einen Verbrennungsmotor mit einer Abgasanlage, in welcher ein Katalysator angeordnet ist, wobei stromaufwärts des Katalysators ein Abgasmischer angeordnet ist.

Die DE 10 2009 047 547 A1 zeigt eine Vorrichtung zur Abgasnachbehandlung eines Verbrennungsmotors. Dabei wird ein Reduktionsmittel stromaufwärts eines Katalysators in einen Abgaskanal eindosiert, wobei der Abgasstrom zwischen der Eindosierstelle für das Reduktionsmittel und dem Katalysator zweimal um jeweils 90° umgelenkt wird, um eine Drallströmung im Abgaskanal auszubilden.

Aus der FR 2 222 538 A1 ist ein Verbrennungsmotor bekannt, welcher vorzugsweise als V-Motor ausgeführt ist, wobei der Auslass des Verbrennungsmotors mit einer Abgasanlage verbunden ist.

Die DE 10 2013 221 508 A1 offenbart ein Abgasnachbehandlungssystem für einen Verbrennungsmotor, bei dem stromabwärts eines Partikelfilters eine Niederdruck-Abgasrückführung aus dem Abgaskanal abzweigt. Dabei ist am Einlass der Niederdruck-Abgasrückführung eine Prallfläche vorgesehen, um das Eindringen von Kondenswasser in die Niederdruck-Abgasrückführung zu vermeiden.

Der Erfindung liegt nun die Aufgabe zugrunde, eine Abgasnachbehandlungsvorrichtung für einen Verbrennungsmotor bereitzustellen, mit dem auf einer vergleichsweise kurzen Wegstrecke eine effektive und effiziente Abgasnachbehandlung möglich und der Abgasgegendruck der Abgasanlage gegenüber bekannten Lösungen reduziert werden kann.

Erfindungsgemäß wird die Aufgabe durch eine Abgasnachbehandlungsvorrichtung für einen Verbrennungsmotor gelöst, wobei eine Abgasanlage des Verbrennungsmotors mit einem Auslass des Verbrennungsmotors verbunden ist. Dabei ist in einem Abgaskanal der Abgasanlage ein erster Katalysator und in Strömungsrichtung eines Abgases des Verbrennungsmotors stromabwärts des ersten Katalysators ein Partikelfilter angeordnet. Der Abgaskanal weist einen ersten Abschnitt auf, welcher den Auslass des Verbrennungsmotors mit dem ersten Katalysator verbindet. Der Abgaskanal weist ferner einen zweiten Abschnitt auf, welcher den ersten Katalysator mit dem Partikelfilter verbindet, wobei dieser zweite Abschnitt eine Biegung von maximal 60° aufweist. Durch eine erfindungsgemäße Abgasnachbehandlung kann der Abgasgegendruck in dem Abschnitt zwischen dem Auslass des Verbrennungsmotors und dem Partikelfilter minimiert werden. Durch die Verringerung des Abgasgegendrucks kann die Motorleistung des Verbrennungsmotors gesteigert werden oder bei gleicher Leistung der Wirkungsgrad verbessert werden, wodurch der Verbrauch des Verbrennungsmotors reduziert werden kann. Bevorzugt ist ein Winkel der Biegung von 30° bis 60°, um einen gezielten Drall und/oder eine gezielte Verwirbelung in das Abgas stromabwärts des ersten Katalysators und stromaufwärts des Partikelfilters einzubringen. Dadurch kann ein in den Abgaskanal eindosiertes Additiv zur Unterstützung einer katalytischen Beschichtung des Partikelfilters, insbesondere einer Beschichtung zur selektiven katalytischen Reduktion von Stickoxiden oder ein Additiv zur Unterstützung des Aufheizens des Partikelfilters, insbesondere Kraftstoff, gleichmäßig vor Eintritt in den Partikelfilter über die gesamte Querschnittsfläche des Abgaskanals zu verteilen. Dadurch kann ein komplexes Mischelement entfallen oder weniger komplex ausgeführt werden.

Durch die in den abhängigen Ansprüchen aufgeführten Merkmale sind vorteilhafte Verbesserungen und Weiterbildungen der erfindungsgemäßen
Abgasnachbehandlungsvorrichtung möglich.

In bevorzugter Ausgestaltung der Erfindung ist vorgesehen, dass der erste Katalysator als Diesel-Oxidationskatalysator oder als NOx-Speicherkatalysator ausgebildet ist. Ist der Verbrennungsmotor als Dieselmotor ausgeführt, so ist es zur optimalen Abgasnachbehandlung wünschenswert, einen Diesel-Oxidationskatalysator oder einen NOx-Speicherkatalysator möglichst motornah anzuordnen, um den Diesel-Oxidationskatalysator oder den NOx-Speicherkatalysator nach einem Start des Verbrennungsmotors möglichst schnell auf eine Betriebstemperatur aufzuheizen, bei der eine effiziente Abgasnachbehandlung möglich ist. Alternativ ist es bei einem fremdgezündeten Ottomotor vorteilhaft, wenn der erste Katalysator ein Drei-Wege-Katalysator ist.

Gemäß einer vorteilhaften Verbesserung der Erfindung ist vorgesehen, dass der Partikelfilter eine Beschichtung zur selektiven katalytischen Reduktion von Stickoxiden (SCR-Beschichtung) aufweist. Durch eine katalytisch wirksame Beschichtung des Partikelfilters kann ein zusätzlicher SCR-Katalysator, insbesondere ein SCR-Katalysator in Unterbodenlage eines Kraftfahrzeuges entfallen, sodass sämtliche Komponenten zur Abgasnachbehandlung motornah angeordnet werden und sich entsprechend schnell auf eine Betriebstemperatur erwärmen. Bei einem fremdgezündeten Verbrennungsmotor kann der Partikelfilter auch eine drei-Wege-katalytisch wirksame Beschichtung aufweisen, um einen weiteren Drei-Wege-Katalysator in Unterbodenlage zu vermeiden und die katalytische Kapazität des ersten Katalysators durch einen weiteren Drei-Wege-Katalysator zu vergrößern.
Alternativ oder zusätzlich ist mit Vorteil vorgesehen, dass in der Abgasanlage stromabwärts des Partikelfilters ein SCR-Katalysator zur selektiven katalytischen Reduktion von Stickoxid angeordnet ist. Durch einen weiteren SCR-Katalysator stromabwärts des Partikelfilters, insbesondere in Unterbodenlage des Kraftfahrzeuges, kann das Temperaturfenster, in dem eine effiziente Reduzierung von Stickoxiden möglich ist, vergrößert werden. Da das Abgas sich in der Regel auf seinem Weg durch die Abgasanlage vom Auslass des Verbrennungsmotors zum Endrohr hin abkühlt, herrscht an dem SCR-Katalysator eine niedrigere Abgastemperatur als an der SCR-Beschichtung des Drei-Wege-Katalysators. Da das Temperaturfenster, in dem eine effiziente selektive katalytische Reduktion von Stickoxiden durch die Zersetzungsneigung von Ammoniak im Temperaturbereich oberhalb von 400°C begrenzt ist, kann der weitere SCR-Katalysator bei hohen Lasten oder bei der Regeneration des Partikelfilters zur Minderung der Stickoxid-Emissionen beitragen.
Erfindungsgemäß ist vorgesehen, dass an der Abgasanlage stromabwärts des ersten Katalysators ein Dosierelement zur Eindosierung eines Reduktionsmittels, insbesondere von wässriger Harnstofflösung, in den Abgaskanal angeordnet ist. Um eine selektive katalytische Reduktion von Stickoxiden auf dem Partikelfilter zu ermöglichen, muss dem Abgas ein Reduktionsmittel zugeführt werden. Da Dieselmotoren in quasi allen Betriebspunkten mit einem Sauerstoffüberschuss betrieben werden, kann die Reduktion der Stickoxide nicht durch einen Drei-Wege-Katalysator und ein im Abgas des Verbrennungsmotors enthaltenes Reduktionsmittel erfolgen. Daher wird stromabwärts des ersten Katalysators, insbesondere im Bereich der Biegung ein Reduktionmittel eindosiert.

Erfindungsgemäß ist dabei vorgesehen, dass das Dosierelement unmittelbar stromabwärts des, und im Wesentlichen parallel zum, ersten Katalysators und stromaufwärts des Partikelfilters angeordnet ist. Durch eine Eindosierung des Reduktionsmittels unmittelbar stromabwärts des ersten Katalysators, insbesondere im Bereich der Biegung, kann eine gute Gleichverteilung des Reduktionsmittels über den Querschnitt des Abgaskanals vor Eintritt in den Partikelfilter erreicht werden. Durch die Biegung zwischen dem ersten Katalysator und dem Partikelfilter wird eine Verwirbelung im Abgaskanal erzeugt, welche zu einer verbesserten Gleichverteilung des Reduktionsmittels führt. Dadurch kann ein zusätzlicher Abgasmischer zwischen dem ersten Katalysator und dem Partikelfilter entfallen oder einfacher ausgeführt werden, was zum einen die Kosten senkt, und zum anderen den Abgasgegendruck in der Abgasanlage nochmals reduziert.

In einer bevorzugten Ausgestaltung der Erfindung ist vorgesehen, dass in dem ersten Abschnitt des Abgaskanals eine Turbine eines Abgasturboladers angeordnet ist. Durch einen Turbine eines Abgasturboladers wird im Abgasstrom eine zusätzliche Turbulenz geschaffen, welche die Gleichverteilung eines in die Abgasanlage eindosierten Reduktionsmittels zusätzlich erhöht. Dadurch kann die Mischstrecke zwischen dem Dosierelement und dem Eintritt in einen SCR-Katalysator, insbesondere die Mischstrecke zwischen dem ersten Katalysator und einem Partikelfilter mit einer SCR-Beschichtung, zusätzlich verkürzt werden.

Erfindungsgemäß ist vorgesehen, dass der Partikelfilter einen ersten Trichter aufweist, welcher sich in einen zweiten Trichter und eine dritten Trichter verzweigt, wobei der zweite Trichter mit einer Niederdruck-Abgasrückführung verbindbar oder verbunden ist, und wobei der dritte Trichter mit einem Hauptkanal des Abgasanlage verbindbar oder verbunden ist. Durch entsprechende Trichter stromabwärts des Filterkörpers des Partikelfilters kann das Abströmen von Abgas aus dem Partikelfilter erleichtert und somit der Strömungswiderstand reduziert werden. Dabei wird insbesondere das Einströmen von Abgas in den Hauptkanal, welcher den Partikelfilter mit einem Endrohr der Abgasanlage verbinden und das Einströmen in die Niederdruck-Abgasrückführung erleichtert.

Um den Abgasgegendruck in der Abgasanlage auf vorteilhafte Weise zu reduzieren ist vorgesehen, das der zweite Abschnitt des Abgaskanals eine Länge von maximal 500 mm, bevorzugt von maximal 350 mm, besonders bevorzugt von maximal 250 mm aufweist. Durch eine Verkürzung des zweiten Abschnitts des Abgaskanals kann das Aufheizen des Partikelfilters erleichtert werden. Dabei kann eine SCR-Beschichtung des Partikelfilters schneller nach einem Kaltstart ihre Betriebstemperatur erreichen und es geht weniger Energie als Abwärme über die Wand des Abgaskanals verloren. Ferner erleichtert eine kurze Ausführung des zweiten Abschnitts des Abgaskanals auch die Regeneration des Partikelfilters. Durch die kürzeren Heizphasen für den Partikelfilter können die Abgasemissionen und der Verbrauch reduziert werden.

Besonders bevorzugt ist dabei, wenn der erste Katalysator und der Partikelfilter jeweils motornah angeordnet sind. Unter einen motornahen Anordnung ist in diesem Zusammenhang eine Abgaslauflänge von maximal 80 cm, vorzugsweise von maximal 60 cm, besonders bevorzugt von maximal 50 cm ab einem Auslass des Verbrennungsmotors zu verstehen. Durch eine motornahe Anordnung der beiden Abgasnachbehandlungskomponenten wird ein Aufheizen der beiden Abgaskomponenten nach einem Kaltstart zusätzlich unterstützt.

Erfindungsgemäß wird ein Verbrennungsmotor für ein Kraftfahrzeug vorgeschlagen, wobei ein Auslass des Verbrennungsmotors mit einer Abgasanlage des Kraftfahrzeuges verbunden ist und in Strömungsrichtung eines Abgases des Verbrennungsmotors durch die Abgasanlage stromabwärts eines ersten Katalysators, insbesondere eine Diesel-Oxidationskatalysators oder eines NOx-Speicherkatalysators, ein Partikelfilter, vorzugsweise ein Diesel-Partikelfilter, besonders bevorzugt ein Diesel-Partikelfilter mit einer Beschichtung zur selektiven katalytischen Reduktion von Stickoxiden angeordnet ist. Die Abgasanlage weist eine Abgaskanal auf, welcher mit einem ersten Abschnitt den Auslass des Verbrennungsmotors mit dem ersten Katalysator verbindet. Der Abgaskanal weist einen zweiten Abschnitt auf, welcher den ersten Katalysator mit dem Partikelfilter verbindet, wobei der zweite Abschnitt des Abgaskanals eine Biegung von maximal 60° aufweist. Bei einem erfindungsgemäße Verbrennungsmotor kann der Abgasgegendruck in dem Abschnitt zwischen dem Auslass des Verbrennungsmotors und dem Partikelfilter minimiert werden. Durch die Verringerung des Abgasgegendrucks kann die Motorleistung des Verbrennungsmotors gesteigert werden oder bei gleicher Leistung der Wirkungsgrad verbessert werden, wodurch der Verbrauch des Verbrennungsmotors reduziert werden kann. Bevorzugt ist ein Winkel der Biegung von 30° bis 60°, um einen gezielten Drall und/oder eine gezielte Verwirbelung in das Abgas stromabwärts des ersten Katalysators und stromaufwärts des Partikelfilters einzubringen. Dadurch kann ein in den Abgaskanal eindosiertes Additiv zur Unterstützung einer katalytischen Beschichtung des Partikelfilters, insbesondere einer Beschichtung zur selektiven katalytischen Reduktion von Stickoxiden oder ein Additiv zur Unterstützung des Aufheizens des Partikelfilters, insbesondere Kraftstoff, gleichmäßig vor Eintritt in den Partikelfilter über die gesamte Querschnittsfläche des Abgaskanals zu verteilen. Dadurch kann ein komplexes Mischelement entfallen oder weniger komplex ausgeführt werden.

In einer bevorzugten Ausführungsform des Verbrennungsmotors ist vorgesehen, dass der Verbrennungsmotor als durch Kompression eines Kraftstoff-Luft-Gemischs selbstzündender Verbrennungsmotor nach dem Dieselprinzip ausgebildet ist. Selbstzündende Verbrennungsmotoren weisen, insbesondere in einem Teillastbereich des Verbrennungsmotors, einen im direkten Vergleich zu fremdgezündeten Verbrennungsmotoren hohen thermischen Wirkungsgrad auf. Daher ist es schwierig, die Abgasnachbehandlungsmotoren eines selbstzündenden Verbrennungsmotors auf eine Betriebstemperatur aufzuheizen. Insbesondere ist es im Teillastbereich des selbstzündenden Verbrennungsmotors schwierig, den Partikelfilter auf eine zur Regeneration des Partikelfilters notwendige Regenerationstemperatur aufzuheizen, bei welcher der im Partikelfilter zurückgehaltene Ruß mit dem Restsauerstoff im Abgas oxidiert werden kann. Durch die motornahe Anordnung des ersten Katalysators und des Partikelfilters kann hier der Wärmeverlust ab dem Auslass des Verbrennungsmotors reduziert werden und es wird weniger Energie zum Aufheizen des Partikelfilters benötigt.

Gemäß einer bevorzugten Ausführungsform der Erfindung ist vorgesehen, dass der ersten Abschnitt des Abgaskanals im Wesentlichen senkrecht zu dem Auslass des Verbrennungsmotors verläuft. Moderne Verbrennungsmotoren weisen ein Vielzahl von Anbauteilen und Zusatzkomponenten auf. Da der Bauraumbedarf in einem Motorraum ohnehin begrenzt ist, ist eine motornahe Führung des Abgaskanal meist nur dann möglich, wenn der Abgaskanal zahlreiche Biegungen aufweist, um an den Abgaskanal an den Anbauteilen des Verbrennungsmotors vorbei zu führen. Daher ist es vorteilhaft, wenn der erste Abschnitt des Abgaskanals im Wesentlich senkrecht zu dem Auslass des Verbrennungsmotors verläuft und somit von den Anbaukomponenten des Verbrennungsmotors beabstandet ist. Dadurch lässt sich eine im wesentlichen gerade Ausführung des Abgaskanal ohne größere Strömungsverluste realisieren.

Ferner ist mit Vorteil vorgesehen, dass ein Einlass des ersten Katalysators weiter räumlich von dem Auslass des Verbrennungsmotors beabstandet ist als ein Einlass des Partikelfilters. Durch eine derartige Anordnung des ersten Katalysators und des Partikelfilters ist eine U-förmige Ausgestaltung des Abgaskanals zwischen dem Auslass des Verbrennungsmotors und dem Partikelfilter mit jeweils großen Biegeradien möglich. Dadurch ist eine kompakte Anordnung des erfindungsgemäßen Abgasnachbehandlungssystem an dem Verbrennungsmotor möglich, wobei die Strömungsverluste und die damit verbundene Erhöhung des Abgasgegendrucks in der Abgasanlage gering gehalten werden können. Zudem ist es durch diese Anordnung möglich, dass der Partikelfilter dicht an dem Motorblock des Verbrennungsmotors angeordnet wird, wodurch die Wärmeverluste, insbesondere die Verluste durch Konvektion und Wärmestrahlung gering gehalten werden können und somit ein schnelles Aufheizen des Partikelfilters zur Regeneration des Partikelfilters unterstützt werden kann.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Gleiche Bauteile oder Bauteile mit gleicher Funktion sind dabei in den Figuren mit gleichen Bezugszeichen gekennzeichnet. Es zeigen:
- Figur 1: ein Ausführungsbeispiel einen Verbrennungsmotors mit einem erfindungsgemäßen Abgasnachbehandlungssystems in einer schematischen Darstellung;
- Figur 2: ein erfindungsgemäßes Abgasnachbehandlungssystem für einen Verbrennungsmotor in einer dreidimensionalen Darstellung.

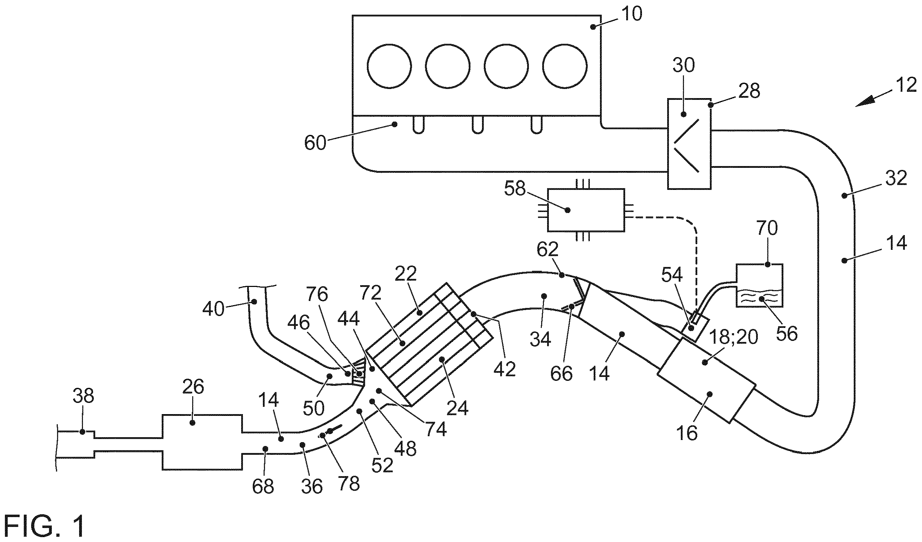

Figur 1 zeigt ein Ausführungsbeispiel eines erfindungsgemäßen Verbrennungsmotors 10 mit einem erfindungsgemäßen Abgasnachbehandlungssystem. Der Verbrennungsmotor 10 ist vorzugsweise als durch Kompression selbstzündender Dieselmotor ausgeführt. Alternativ kann der Verbrennungsmotor 10 auch als mittels einer Zündvorrichtung fremdgezündeter Ottomotor, insbesondere als Ottomotor mit Kraftstoffdirekteinspritzung, ausgeführt sein. Der Verbrennungsmotor 10 weist einen Auslass 60 auf, welcher mit einer Abgasanlage 12 verbunden ist. Die Abgasanlage 12 umfasst einen ersten Katalysator 16, vorzugsweise eine Diesel-Oxidationskatalysator 18 oder einen NOx-Speicherkatalysator 20, und einen stromabwärts des ersten Katalysators 16 angeordneten Partikelfilter 22, welcher vorzugsweise eine Beschichtung 24 zur selektiven katalytischen Reduktion von Stickoxiden (SCR-Beschichtung) aufweist. Die Abgasanlage 12 weist ferner einen Abgaskanal 14 auf, welcher den Auslass 60 mit einem Endrohr 38 der Abgasanlage 12 verbindet. Dabei verbindet ein erster Abschnitt 32 des Abgaskanals 14 den Auslass 60 des Verbrennungsmotors 10 mit dem ersten Katalysator 16. In diesem ersten Abschnitt 32 ist vorzugsweise stromabwärts des Auslasses 60 und stromaufwärts des ersten Katalysators 16 eine Turbine 30 eines Abgasturboladers 28 angeordnet. Ein zweiter Abschnitt 34 des Abgaskanals 14 verbindet den ersten Katalysator 16 mit dem Partikelfilter 22, wobei in diesem zweiten Abschnitt 34 ein Dosierelement 54 zur Eindosierung eines in einem Vorratsbehälter 70 bevorrateten Reduktionsmittels 56, insbesondere von wässriger Harnstofflösung, angeordnet ist.

Der Partikelfilter 22 weist einen Einlass 42 und zwei Auslässe 50, 52 auf. Dabei ist der erste Auslass 50 des Partikelfilters 22 mit einer Niederdruck-Abgasrückführung 40 verbunden, über welche der Frischluft stromaufwärts eines von der Turbine 30 angetriebenen Verdichters des Abgasturboladers 28 Abgas beigemischt werden kann, um die Rohemissionen bei der Verbrennung des Kraftstoff-Luft-Gemischs in den Brennräumen des Verbrennungsmotors 10 abzusenken. Der zweite Auslass 52 des Partikelfilters 22 ist mit einem dritten Abschnitt 68 des Abgaskanals 14 der Abgasanlage 12, welcher auch als Hauptkanal 36 bezeichnet wird, verbunden, welcher den Partikelfilter 22 mit einem Endrohr 38 der Abgasanlage 12 verbindet. In dem Hauptkanal 36, insbesondere in einer Unterbodenlage eines Kraftfahrzeuges, in welchem ein erfindungsgemäßen Verbrennungsmotors 10 verbaut ist, kann ein weiterer SCR-Katalysator 26 angeordnet sein, um eine zusätzliche Abgasreinigung zu ermöglichen. Alternativ kann der weitere SCR-Katalysator 26 auch das Temperaturfenstern vergrößern, in welchem zumindest eine der beiden Abgaskomponenten 22, 26 zur selektiven katalytischen Reduktion von Stickoxiden eine effiziente Umsetzung von Stickoxiden ermöglicht.

Alternativ kann bei einer Ausführung des Verbrennungsmotors als Ottomotor der erste Katalysator 16 als Drei-Wege-Katalysator ausgeführt sein und der Partikelfilter 22 alternativ zu einer SCR-Beschichtung 24 auch eine drei-Wege-katalytisch wirksame Beschichtung aufweisen.

Vorzugsweise sind der erste Katalysator 16 und der Partikelfilter 22 jeweils motornah angeordnet. Unter einer motornahen Anordnung ist in diesem Zusammenhang eine Anordnung mit einer Abgaslauflänge von maximal 80 cm, vorzugsweise von maximal 60 cm, ab dem Auslass 60 des Verbrennungsmotors 10 zu verstehen. Dabei ist zu beachten, dass für den Fall einer Ausführung des Partikelfilter 22 mit einer SCR-Beschichtung 24 zwischen dem ersten Katalysator 16 und dem Partikelfilter 22 eine hinreichend lange Mischstrecke zur Vermischung des in den zweiten Abschnitt 34 des Abgaskanal 14 eindosierten Reduktionsmittels 56 mit dem Abgas vor Eintritt in den Partikelfilter 22 gegeben ist. Um die Länge der Mischstrecke zu verkürzen weist der zweite Abschnitt 34 des Abgaskanals 14 eine Biegung 62 von 60° auf, wodurch es aufgrund der Umlenkung zu einer Verwirbelung des Abgases kommt, und somit das Reduktionsmittel 56 auf vergleichsweise kurzer Mischstrecke gleichmäßig im Abgaskanal 14 verteilt wird. Zudem kann der zweite Abschnitt 34 des Abgaskanals 14 ein Mischelement 66 aufweisen, um die Durchmischung des Abgasstroms mit dem Reduktionsmittel 56 weiter zu verbessern. An dem Partikelfilter 22 ist in Strömungsrichtung eines Abgases durch den Partikelfilter 22 stromabwärts des Filterkörpers 72 eine Verzweigung 74 ausgebildet, an der sich der Abgaskanal 14 in eine Niederdruck-Abgasrückführung 40 und einen Hauptkanal 50, welcher den Partikelfilter 22 mit einem Endrohr 38 der Abgasanlage 12 verbindet, verzweigt. Dazu weist der Partikelfilter 22 stromabwärts des Filterkörpers 72 einen ersten Trichter 44 auf, welcher sich in einen zweiten Trichter 46 und einen dritten Trichter 48 verzweigt. Dabei ist an dem zweiten Trichter 46 der erste Auslass 50 ausgebildet, an den sich die Niederdruck-Abgasrückführung 40 anschließt. Zudem trägt der zweite Trichter 46 ein Filterelement 76, um das Eindringen von Rußpartikeln in die Niederdruck-Abgasrückführung 40 zu verhindern. Der dritte Trichter 48 weist einen größeren Durchmesser als der zweite Trichter 46 auf und verbindet den Partikelfilter 22 mit dem Hauptkanal 36 der Abgasanlage 12.

Durch die zunehmende Verschärfung der Abgasgesetzgebung, insbesondere in Bezug auf die Stickoxid-Emissionen, ist es notwendig, innermotorische Maßnahmen und Maßnahmen zur Abgasnachbehandlung zu verbinden. Eine Möglichkeit, die Rohemissionen des Verbrennungsmotors 10 zu verbessern, besteht darin, der Frischluft Abgas zuzumischen, um die Bildung von Stickoxid-Emissionen zu verringern. Dabei ist es vorteilhaft, wenn das zurückgeführte Abgas möglichst kühl ist. Aus diesem Grund kann in der Niederdruck-Abgasrückführung 40 ein Niederdruck-Abgasrückführungs-Kühler angeordnet sein. In dem Hauptkanal 36 der Abgasanlage 12 kann zusätzlich eine Abgasklappe 78 angeordnet sind, mit welcher die der Niederdruck-Abgasrückführung 40 zugeführt Abgasmenge beeinflusst werden kann.

Der Verbrennungsmotor 10 umfasst ferner ein Steuergerät 58, mit welchem die den Brennräumen des Verbrennungsmotors 10 zugeführte Kraftstoffmenge gesteuert oder geregelt wird. Ferner wird über das Steuergerät 58 das erfindungsgemäße Abgasnachbehandlungssystem angesteuert und beispielsweise die Menge des in den Abgaskanal 14 eindosierten Reduktionsmittels 56 oder die Regeneration des Partikelfilters 22 gesteuert.

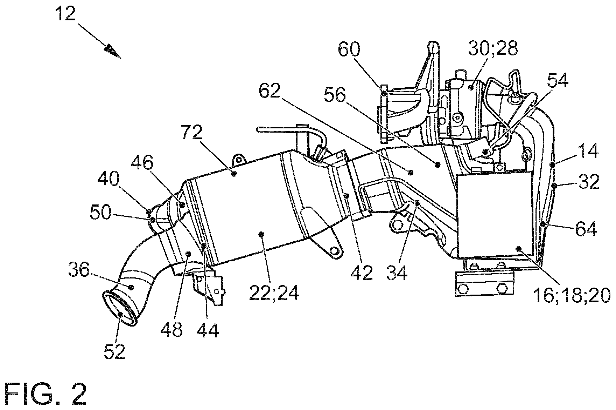

In Figur 2 ist die Abgasanlage 12 eines erfindungsgemäßen Verbrennungsmotor 10 in einer dreidimensionalen Darstellung gezeigt. Durch das erfindungsgemäße Abgasnachbehandlungssystem kann ein minimaler Abgasgegendruck bei einer kompakten und platzsparenden Bauweise realisiert werden. Dabei weist die Abgasanlage 12 einen unmittelbar im Anschluss an den Auslass 60 des Verbrennungsmotors 10 angeordneten Abgasturbolader 28 auf, dessen Turbine 30 von einem Abgas des Verbrennungsmotors 10 angetrieben wird. Der Abgaskanal 14 weist ferner einen ersten Abschnitt 32 auf, welcher eine 90° Umlenkung aufweist und anschließend im Wesentlichen senkrecht zu dem Auslass 60 des Verbrennungsmotors 10 verläuft. An den ersten Abschnitt 32 des Abgaskanals 14 schließt sich ein erster Katalysator 16 in Form eines Diesel-Oxidationskatalysators 18 oder eines NOx-Speicherkatalysators 20 an. Dabei ist der Einlass 64 des Diesel-Oxidationskatalysators 18 oder des NOx-Speicherkatalysators 20 weiter von dem Auslass 60 des Verbrennungsmotors 10 beabstandet als der Einlass 42 des Partikelfilters 22. Dabei ist der Abgaskanal 14 im Bereich zwischen dem Auslass 60 des Verbrennungsmotors 10 und dem Einlass 42 in den Partikelfilter 22 in Form einer Schlaufe mit großen Biegeradien ausgeführt, um den Strömungswiderstand gering zu halten.
Das Dosierelement 54 ist im Wesentlichen parallel zu dem Diesel-Oxidationskatalysator 18 oder dem NOx-Speicherkatalysator 20 angeordnet, wodurch das Reduktionsmittel 56 unmittelbar stromabwärts des Diesel-Oxidationskatalysators 18 oder des NOx-Speicherkatalysators 20 im Bereich der Biegung 62 in den zweiten Abschnitt 34 des Abgaskanals 14 eindosiert werden kann. Der zweite Abschnitt 34 des Abgaskanals 14 ist vorzugsweise frei von Einbauten, insbesondere frei von Mischelementen 66 ausgeführt, um den Abgasgegendruck in diesem Bereich zu minimieren.
Ist der Partikelfilter 22 ohne eine Beschichtung 24 zur selektiven, katalytischen Reduktion von Stickoxiden ausgeführt, so ist der zweite Abschnitt 34 des Abgaskanals 14 möglichst kurz und vorzugsweise geradlinig ausgeführt, um die Strömungs- und Wärmeverluste gering zu halten und den Abgasgegendruck vor Eintritt in den Partikelfilter 22 nicht zu erhöhen.

### Bezugszeichenliste

- 10: Verbrennungsmotor
- 12: Abgasanlage
- 14: Abgaskanal
- 16: erster Katalysator
- 18: Diesel-Oxidationskatalysator

- 20: NOx-Speicherkatalysator
- 22: Partikelfilter
- 24: Beschichtung zur selektiven katalytischen Reduktion von Stickoxiden
- 26: SCR-Katalysator (Katalysator zur selektiven katalytischen Reduktion von Stickoxiden)
- 28: Abgasturbolader

- 30: Turbine
- 32: erster Abschnitt des Abgaskanals
- 34: zweiter Abschnitt des Abgaskanals
- 36: Hauptkanal
- 38: Endrohr

- 40: Niederdruck-Abgasrückführung
- 42: Einlass (Partikelfilter)
- 44: erster Trichter
- 46: zweiter Trichter
- 48: dritter Trichter

- 50: erster Auslass
- 52: zweiter Auslass
- 54: Dosierelement
- 56: Reduktionsmittel
- 58: Steuergerät
- 60: Auslass
- 62: Biegung
- 64: Einlass (erster Katalysator)
- 66: Mischelement
- 68: dritter Abschnitt des Abgaskanals

- 70: Vorratsbehälter
- 72: Filterkörper
- 74: Verzweigung
- 76: Filterelement
- 78: Abgasklappe

## Patentansprüche

1. Abgasnachbehandlungssystem für einen Verbrennungsmotor (10), umfassend eine Abgasanlage (12), welche mit einem Auslass (60) des Verbrennungsmotors (10) verbindbar ist und in der in Strömungsrichtung eines Abgases des Verbrennungsmotors (10) durch die Abgasanlage (12) stromabwärts eines erster Katalysators (16) ein Partikelfilter (22) angeordnet ist, wobei die Abgasanlage (12) einen Abgaskanal (14) aufweist, welcher mit einem ersten Abschnitt (32) den Auslass (60) des Verbrennungsmotors (10) mit dem ersten Katalysator (16) verbindet, wobei der Abgaskanal (14) in einem zweiten Abschnitt (34) zwischen dem ersten Katalysator (16) und dem Partikelfilter (22) eine Biegung (62) von maximal 60° aufweist, **dadurch gekennzeichnet, dass** der Partikelfilter (22) einen ersten Trichter (44) aufweist, welcher sich in einen zweiten Trichter (46) und einen dritten Trichter (48) verzweigt, wobei der zweite Trichter (46) mit einer Niederdruck-Abgasrückführung (40) und der dritte Trichter mit einem Hauptkanal (36) der Abgasanlage (12) verbindbar ist, wobei an der Abgasanlage (12) stromabwärts des ersten Katalysators (16) ein Dosierelement (54) zur Eindosierung eines Reduktionsmittels (56) in den Abgaskanal (14) angeordnet ist, wobei das Dosierelement (54) unmittelbar stromabwärts des ersten Katalysators (16) und stromaufwärts des Partikelfilters (22) im Wesentlichen parallel zum ersten Katalysator (16) angeordnet ist, und wobei die Biegung (62) aufgrund der Umlenkung eine Verwirbelung verursacht, wodurch sich das Reduktionsmittel (56) mit dem Abgasstrom des Verbrennungsmotors (10) vermischt.

2. Abgasnachbehandlungssystem nach Anspruch 1, **dadurch gekennzeichnet, dass** der erste Katalysator (16) als Diesel-Oxidationskatalysator (18) oder als NOx-Speicherkatalysator (20) ausgebildet ist.

3. Abgasnachbehandlungssystem nach Anspruch 1 oder 2, **dadurch gekennzeichnet, dass** der Partikelfilter (22) eine Beschichtung (24) zur selektiven katalytischen Reduktion von Stickoxiden (SCR-Beschichtung) aufweist.

4. Abgasnachbehandlungssystem nach einem der Ansprüche 1 bis 3, **dadurch gekennzeichnet, dass** in der Abgasanlage (12) stromabwärts des Partikelfilters (22) ein SCR-Katalysator (26) zur selektiven katalytischen Reduktion von Stickoxiden angeordnet ist.

5. Abgasnachbehandlungssystem nach einem der Ansprüche 1 bis 4, **dadurch gekennzeichnet, dass** der zweite Abschnitt (34) des Abgaskanals (14) frei von Mischelementen (66) ausgeführt ist.

6. Abgasnachbehandlungssystem nach einem der Ansprüche 1 bis 5, **dadurch gekennzeichnet, dass** in dem ersten Abschnitt (32) des Abgaskanals (14) eine Turbine (30) eines Abgasturboladers (28) angeordnet ist.

7. Abgasnachbehandlungssystem nach einem der Ansprüche 1 bis 6, **dadurch gekennzeichnet, dass** der zweite Abschnitt (34) des Abgaskanals (14) eine Länge von maximal 500 mm aufweist.

8. Abgasnachbehandlungssystem nach einem der Ansprüche 1 bis 7, **dadurch gekennzeichnet, dass** der erste Katalysator (16) und der Partikelfilter (22) motornah angeordnet sind.

9. Verbrennungsmotor (10) für ein Kraftfahrzeug mit einem Abgasnachbehandlungssystem nach einem der Ansprüche 1 bis 8.

10. Verbrennungsmotor (10) nach Anspruch 9, **dadurch gekennzeichnet, dass** der Verbrennungsmotor (10) als ein selbstzündender Verbrennungsmotor (10) nach dem Dieselprinzip ausgebildet ist.

11. Verbrennungsmotor nach Anspruch 9 oder 10, **dadurch gekennzeichnet, dass** der erste Abschnitt (32) des Abgaskanals (14) im Wesentlichen senkrecht zu dem Auslass (60) des Verbrennungsmotors (10) verläuft.

12. Verbrennungsmotor nach einem der Ansprüche 9 bis 11, **dadurch gekennzeichnet, dass** ein Einlass (64) des ersten Katalysators (16) weiter von dem Auslass (60) des Verbrennungsmotors (10) beabstandet ist als ein Einlass (42) des Partikelfilters (22).

## Claims

1. Exhaust-gas aftertreatment system for an internal combustion engine (10), comprising an exhaust-gas system (12) which is connectable to an outlet (60) of the internal combustion engine (10) and in which, in a flow direction of an exhaust gas of the internal combustion engine (10) through the exhaust system (12), a particle filter (22) is arranged downstream of a first catalytic converter (16), wherein the exhaust-gas system (12) has an exhaust-gas channel (14) which, by means of a first portion (32), connects the output (60) of the internal combustion engine (10) to the first catalytic converter (16), wherein the exhaust-gas channel (14), in a second portion (34) between the first catalytic converter (16) and the particle filter (22), has a bend (62) of at most 60°, **characterized in that** the particle filter (22) has a first funnel (44) which branches into a second funnel (46) and a third funnel (48), wherein the second funnel (46) is connectable to a low-pressure exhaust-gas recirculation system (40) and the third funnel is connectable to a main channel (36) of the exhaust-gas system (12), wherein a dosing element (54) for dosing a reducing agent (56) into the exhaust-gas channel (14) is arranged on the exhaust-gas system (12) downstream of the first catalytic converter (16), wherein the dosing element (54) is arranged directly downstream of the first catalytic converter (16) and upstream of the particle filter (22), substantially in parallel with respect to the first catalytic converter (16), and wherein the bend (62), owing to the diversion, causes swirling, as a result of which the reducing agent (56) mixes with the exhaust-gas stream of the internal combustion engine (10).

2. Exhaust-gas aftertreatment system according to Claim 1, **characterized in that** the first catalytic converter (16) is configured as a diesel oxidation catalytic converter (18) or as a NOx storage catalytic converter (20).

3. Exhaust-gas aftertreatment system according to Claim 1 or 2, **characterized in that** the particle filter (22) has a coating (24) for the selective catalytic reduction of nitrogen oxides (SCR coating).

4. Exhaust-gas aftertreatment system according to any of Claims 1 to 3, **characterized in that** an SCR catalytic converter (26) for the selective catalytic reduction of nitrogen oxides is arranged in the exhaust-gas system (12) downstream of the particle filter (22).

5. Exhaust-gas aftertreatment system according to any of Claims 1 to 4, **characterized in that** the second portion (34) of the exhaust-gas channel (14) is designed to be free from mixing elements (66).

6. Exhaust-gas aftertreatment system according to any of Claims 1 to 5, **characterized in that** a turbine (30) of an exhaust-gas turbocharger (28) is arranged in the first portion (32) of the exhaust-gas channel (14).

7. Exhaust-gas aftertreatment system according to any of Claims 1 to 6, **characterized in that** the second portion (34) of the exhaust-gas channel (14) has a length of at most 500 mm.

8. Exhaust-gas aftertreatment system according to any of Claims 1 to 7, **characterized in that** the first catalytic converter (16) and the particle filter (22) are arranged in a close-coupled position to the engine.

9. Internal combustion engine (10) for a motor vehicle, having an exhaust-gas aftertreatment system according to any of Claims 1 to 8.

10. Internal combustion engine (10) according to Claim 9, **characterized in that** the internal combustion engine (10) is designed as an auto-ignition internal combustion engine (10) in accordance with the diesel principle.

11. Internal combustion engine according to Claim 9 or 10, **characterized in that** the first portion (32) of the exhaust-gas channel (14) runs substantially perpendicular to the outlet (60) of the internal combustion engine (10).

12. Internal combustion engine according to any of Claims 9 to 11, **characterized in that** an inlet (64) of the first catalytic converter (16) is arranged so as to be spaced apart further than an inlet (42) of the particle filter (22) from the outlet (60) of the internal combustion engine (10).

## Revendications

1. Système de post-traitement des gaz d'échappement pour un moteur à combustion interne (10), comprenant un système d'échappement (12) qui peut être relié à une sortie (60) du moteur à combustion interne (10) et dans lequel un filtre à particules (22) est disposé en aval d'un premier catalyseur (16) dans la direction d'écoulement des gaz d'échappement du moteur à combustion interne (10) à travers le système d'échappement (12), le système d'échappement (12) possédant un conduit de gaz d'échappement (14) qui, avec une première portion (32), relie la sortie (60) du moteur à combustion interne (10) au premier catalyseur (16), le conduit de gaz d'échappement (14) possédant, dans une deuxième portion (34) entre le premier catalyseur (16) et le filtre à particules (22), une courbure (62) maximale de 60°, **caractérisé en ce que** le filtre à particules (22) possède un premier entonnoir (44) qui se ramifie en un deuxième entonnoir (46) et un troisième entonnoir (48), le deuxième entonnoir (46) pouvant être relié à un recyclage des gaz d'échappement basse pression (40) et le troisième entonnoir à un conduit principal (36) du système d'échappement (12), un élément de dosage (54) destiné à une injection dosée d'un agent réducteur (56) dans le conduit de gaz d'échappement (14) étant disposé au niveau du système d'échappement (12) en aval du premier catalyseur (16), l'élément de dosage (54) étant disposé directement en aval du premier catalyseur (16) et en amont du filtre à particules (22) sensiblement en parallèle du premier catalyseur (16), et la courbure (62), du fait de la déviation, provoque un tourbillonnement, moyennant quoi l'agent réducteur (56) se mélange avec le flux de gaz d'échappement du moteur à combustion interne (10).

2. Système de post-traitement des gaz d'échappement selon la revendication 1, **caractérisé en ce que** le premier catalyseur (16) est réalisé sous la forme d'un catalyseur à oxydation de diesel (18) ou d'un catalyseur à accumulation de Nox (20).

3. Système de post-traitement des gaz d'échappement selon la revendication 1 ou 2, **caractérisé en ce que** le filtre à particules (22) possède un revêtement (24) destiné à la réduction catalytique sélective d'oxydes d'azote (revêtement de RCS)

4. Système de post-traitement des gaz d'échappement selon l'une des revendications 1 à 3, **caractérisé en ce qu'**un catalyseur à RCS (26) destiné à la réduction catalytique sélective d'oxydes d'azote est disposé dans le système d'échappement (12) en aval filtre à particules (22).

5. Système de post-traitement des gaz d'échappement selon l'une des revendications 1 à 4, **caractérisé en ce que** la deuxième portion (34) du conduit de gaz d'échappement (14) est réalisée exempte d'éléments de mélange (66).

6. Système de post-traitement des gaz d'échappement selon l'une des revendications 1 à 5, **caractérisé en ce qu'**une turbine (30) d'un turbocompresseur de gaz d'échappement (28) est disposée dans la première portion (32) du conduit de gaz d'échappement (14).

7. Système de post-traitement des gaz d'échappement selon l'une des revendications 1 à 6, **caractérisé en ce que** la deuxième portion (34) du conduit de gaz d'échappement (14) présente une longueur maximale de 500 mm.

8. Système de post-traitement des gaz d'échappement selon l'une des revendications 1 à 7, **caractérisé en ce que** le premier catalyseur (16) et le filtre à particules (22) sont disposés près du moteur.

9. Moteur à combustion interne (10) pour un véhicule automobile, comprenant un système de post-traitement des gaz d'échappement selon l'une des revendications 1 à 8.

10. Moteur à combustion interne (10) selon la revendication 9, **caractérisé en ce que** le moteur à combustion interne (10) est réalisé sous la forme d'un moteur à combustion interne (10) à autoallumage selon le principe du diesel.

11. Moteur à combustion interne selon la revendication 9 ou 10, **caractérisé en ce que** la première portion (32) du conduit de gaz d'échappement (14) suit un tracé sensiblement perpendiculaire à la sortie (60) du moteur à combustion interne (10).

12. Moteur à combustion interne selon l'une des revendications 9 à 11, **caractérisé en ce que** l'entrée (64) du premier catalyseur (16) est plus espacée de la sortie (60) du moteur à combustion interne (10) qu'une entrée (42) du filtre à particules (22).
